# EUROPÄISCHE PATENTSCHRIFT

(11) **EP 1 395 957 B1**
(45) Veröffentlichungstag und Bekanntmachung des Hinweises auf die Patenterteilung: **04.04.2012**
(21) Anmeldenummer: 02754197.8
(22) Anmeldetag: 12.06.2002
(51) Int. Cl.: G07B 15/00

(54) **DUALES MAUTSYSTEM**
DUAL TOLL SYSTEM
SYSTEME DE PEAGE DUEL

(30) Priorität: 12.06.2001 AT 9132001
(43) Veröffentlichungstag der Anmeldung: 10.03.2004
(73) Patentinhaber: SIEMENS AKTIENGESELLSCHAFT, 80333 München (DE)
(72) Erfinder: KONRAD, Wolfgang, A-2340 Mödling (AT); GILA, Janos, A-2340 Mödling (AT)
(86) Internationale Anmeldenummer: PCT/DE2002/002158
(87) Internationale Veröffentlichungsnummer: WO 2002/101665

(56) Entgegenhaltungen:
- EP-A- 1 006 340
- DE-A- 4 310 099
- US-A- 5 970 481

## Beschreibung

Die Erfindung betrifft ein Mautsystem mit einem Positionsermittlungssystem zur Ermittlung der Position eines Fahrzeuges mit einer fahrzeugseitigen Bemautungsvorrichtung, die eine Empfangseinheit aufweist, die dazu eingerichtet ist, von dem Positionsermittlungssystem Positionsdaten zu empfangen und an eine Steuerung der Bemautungsvorrichtung zu übertragen, die dazu eingerichtet ist, anhand der Positionsdaten aktuelle Ortskoordinaten des Fahrzeuges zu bestimmen, und die Bemautungsvorrichtung eine Sendeeinheit aufweist, die dazu eingerichtet ist, Daten an ein fahrzeugexternes Abrechnungszentrum zu übermitteln, welches eine Empfangseinheit aufweist, die dazu eingerichtet ist, von der Bemautungsvorrichtung Daten zu empfangen und an eine Steuerung des Abrechnungszentrums weiterzuleiten.

Weiters betrifft die Erfindung eine fahrzeugseitige Bemautungsvorrichtung eines Mautsystems, welche eine Empfangseinheit aufweist, die dazu eingerichtet ist, von einem Positionsermittlungssystem Positionsdaten zu empfangen und an eine Steuerung zu übertragen, die dazu eingerichtet ist anhand der Positionsdaten aktuelle Ortskoordinaten des Fahrzeuges zu bestimmen, und die Bemautungsvorrichtung eine Sendeeinheit aufweist, die dazu eingerichtet ist, Daten an das Abrechnungszentrum zu übermitteln.

Die Erfindung betrifft auch ein fahrzeugexternes Abrechnungszentrum eines Mautsystems, welches ein Positionsermittlungssystem zur Ermittlung der Position eines Fahrzeuges und eine fahrzeugseitige Bemautungsvorrichtung aufweist, wobei das Abrechnungszentrum eine Empfangseinheit aufweist, die dazu eingerichtet ist, von der Bemautungsvorrichtung Daten zu empfangen.

Die EP 1 006 340 beschreibt ein Verfahren zur fahrzeuginternen Feststellung ob sich ein Fahrzeug auf einer von mehreren vorgegebenen, insbesondere gebührenpflichtigen Straßen befindet. Dabei werden Messdaten hinsichtlich der zurückgelegten Wegstrecke in Breiten- und Längenkoordinaten ermittelt und mit im Fahrzeug verfügbaren Datensätzen verglichen.

Die US 5,970,481 zeigt Vorrichtungen und Verfahren zur Mautermittlung bzw. zur Bestimmung zurückgelegter Distanzen, bestehend aus einer zu einem Fahrzeug gehörenden Einheit umfassend eine Positionierungsvorrichtung, odometrische Vorrichtungen und Kommunikationsvorrichtungen sowie vom Fahrzeug abgesetzt angeordnete Vorrichtungen zum Empfang und zur Verarbeitung vom Fahrzeug gesendeter Informationen.

Aus der DE 43 44 433 A1 sind eine Bemautungsvorrichtung bzw. ein Mautsystem der eingangs genannten Art bekannt geworden, wobei aktuelle Orts-Koordinaten von einem GPS-Empfänger der fahrzeugseitigen Beamutungsvorrichtung erfasst, und permanent mit den in einer elektronischen Vignette intern gespeicherten Einfahrt/Ausfahrt-Koordinaten einer Autobahnstrecke verglichen und bei Übereinstimmung der Koordinaten diese mittels des digitalen mobilen Netzwerkes an ein Fahrzeug externes Abrechnungszentrum übertragen werden, wobei im Abrechnungszentrum aus den übertragenen Daten die zurückgelegten Autobahnkilometer sowie die damit verbundenen Autobahngebühren berechnet werden.

Die WO 95/20801 beschreibt eine Bemautungsvorrichtung zur Feststellung von Mautgebühren, wobei die aktuell ermittelte Position des Fahrzeuges mit einer Vielzahl von Positionen von virtuellen Bemautungsstellen verglichen wird.

Nachteilig an den bekannten Bemautungsvorrichtungen ist vor allem, dass bei einem zeitweiligen Ausfall der Kommunikation mit dem Positionsmessungssystem, keine Bemautung durchgeführt werden kann. Darüber hinaus ist es von Nachteil, dass das Datenaufkommen in Mautsystemen, welche die bekannten Bemautungsvorrichtungen verwenden, sehr hoch ist infolge des permanenten Vergleiches der aktuellen Orts-Koordinaten mit den Koordinaten der virtuellen Bemautungsstellen.

Es ist daher eine Aufgabe der Erfindung eine einfach und kostengünstig zu realisierendes Mautsystem zu schaffen mit dem auch bei einem zeitweiligen Ausfall der Kommunikation mit einem Positionsermittlungssystem eine korrekte Bemautung durchgeführt werden kann.

Diese Aufgabe wird mit einem Mautsystem der eingangs genannten Art erfindungsgemäß dadurch gelöst, dass die Steuerung der Bemautungsvorrichtung und/oder die Steuerung des Abrechnungszentrums, dazu eingerichtet ist eine für eine befahrene Strecke charakteristische Signatur (SIG) als charakteristische Merkmale einer, anhand der Ortskoordinaten ermittelten Trajektorie der gefahrenen Strecke zu berechnen, wobei die Steuerung des Abrechnungszentrums dazu eingerichtet ist, anhand der Signatur festzustellen, ob die Strecke mautpflichtig ist, wobei die Steuerung weiters dazu eingerichtet ist, für den Fall, dass die befahrene Strecke mautpflichtig ist, anhand einer in einem Speicher abgelegten Benutzerberechtigung zu überprüfen, ob das Fahrzeug zur Benutzung dieser Strecke berechtigt ist.

Die Erfindung ermöglicht es, durch Berechnung einer eine befahrene Strecke eindeutig charakterisierende Signatur das Datenaufkommen in dem Mautsystem wesentlich zu reduzieren, da im Gegensatz zu den bekannten Verfahren und Systemen in Form einer ja/nein Entscheidung festgestellt werden kann, ob eine mautpflichtige Strecke befahren wird oder nicht und daher keine permanente Übertragung von Positionsdaten zur Bestimmung der Mautgebühren notwendig ist.

Zur Realisierung des erfindungsgemäßen System eignet sich insbesondere eine Bemautungsvorrichtung der eingangs genannten Art, bei welcher die Steuerung der Bemautungsvorrichtung dazu eingerichtet ist, eine für eine befahrene Strecke charakteristische Signatur (SIG) als charakteristische Merkmale einer anhand der Orts-Koordinaten ermittelten Trajektorie der gefahrenen Strecke zu berechnen und an die Sendeeinheit zu übermitteln.

Eine vorteilhafte Ausführungsform der Erfindung sieht vor, dass die Steuerung der Bemautungsvorrichtung dazu eingerichtet ist, die Signatur in vorgebbaren Zeitintervallen zu berechnen.

In einer bevorzugten Ausführungsform der Erfindung ist das Positionsermittlungssystem ein Satellitennavigationssystem.

Weitere Vorteile lassen sich dadurch erzielen, dass die fahrzeugseitige Bemautungsvorrichtung dazu eingerichtet ist, die Signatur an das Abrechnungszentrum über ein Funk-Netz zu übertragen.

Darüber hinaus kann die fahrzeugseitige Bemautungsvorrichtung dazu eingerichtet sein, über das Funknetz Positionskorrekturdaten zur Ermittlung der Orts-Koordinaten zu empfangen.

Zur Realisierung des erfindungsgemäßen System eignet sich insbesondere auch ein Abrechnungszentrum der eingangs genannten Art, welches eine Steuerung aufweist, die dazu eingerichtet ist, anhand einer für eine von dem Fahrzeug befahrenen Strecke charakteristischen Signatur festzustellen, ob die Strecke mautpflichtig ist, wobei die Steuerung weiters dazu eingerichtet ist, für den Fall, dass die befahrene Strecke mautpflichtig ist, anhand einer in einem Speicher abgelegten Benutzerberechtigung zu überprüfen, ob das Fahrzeug zur Benutzung dieser Strecke berechtigt ist.

Vorteilhafterweise ist die Empfangseinheit des Abrechnungszentrums dazu eingerichtet, von der Bemautungsvorrichtung Orts-Koordinaten des Fahrzeuges zu empfangen und an die Steuerung weiterzuleiten, die dazu eingerichtet ist, anhand der Orts-Koordinaten die für die von dem Fahrzeug befahrene Strecke charakteristische Signatur zu berechnen.

In einer bevorzugten Ausführungsform der Erfindung ist die Benutzungsberechtigung ein dem Fahrzeug zugeordnetes Konto, und die Steuerung kann dazu eingerichtet sein, eine anfallende Mautgebühr von dem Konto abzubuchen.

Die Erfindung samt weiterer Vorteile wird im folgenden anhand einiger nicht einschränkender Ausführungsbeispiele, die in der Zeichnung dargestellt sind näher erläutert. In dieser zeigen:
Fig. 1 ein duales Mautsystem mit einer erfindungsgemäßen Bemautungsvorrichtung,
Fig. 1a eine Wertkarte zur Bemautung eines Fahrzeuges,
Fig. 2 einen schematischer Ablauf zur Ermittlung, ob eine befahrene Strecke mautpflichtig ist,
Fig. 3 eine anhand von Orts-Koordinaten ermittelte Signatur einer befahrenen Strecke,
Fig. 4 einen Vergleich zwischen der Signatur aus Fig. 3 und einer Referenzsignatur einer mautpflichtigen Strecke,
Fig. 5 eine Variante der Wertkarte aus Fig. 1a im näheren Detail und ein Lesegerät zum Aufbuchen einer Benutzerberechtigung auf die Wertkarte;
Fig. 6 einen mobiler Datenträger mit einem Code zum Aufbuchen einer Benutzerberechtigung auf die Wertkarte,
Fig. 7 die Wertkarte aus Fig. 5, die zwecks Aufladen einer Benutzungsberechtigung mit einem Datennetz verbunden ist,
Fig. 8 ein duales Mautsystem mit einem Abrechnungszentrum, welches zur Kommunikation mit einer erfindungsgemäßen Bemautungsvorrichtung eingerichtet ist,
Fig. 9 das Abrechnungszentrum und die erfindungsgemäße Bemautungsvorrichtung aus Fig. 8 im näheren Detail,
Fig. 10 ein Überwachungssystem zur Überwachung des Betriebszustandes der Bemautungsvorrichtungen in dem dualen Mautsystem aus Fig. 8 und
Fig. 11 ein an einem Fahrzeug angeordnetes Display zur Anzeige eines für den Betriebszustand der Bemautungsvorrichtung repräsentativen Kontrollmusters.

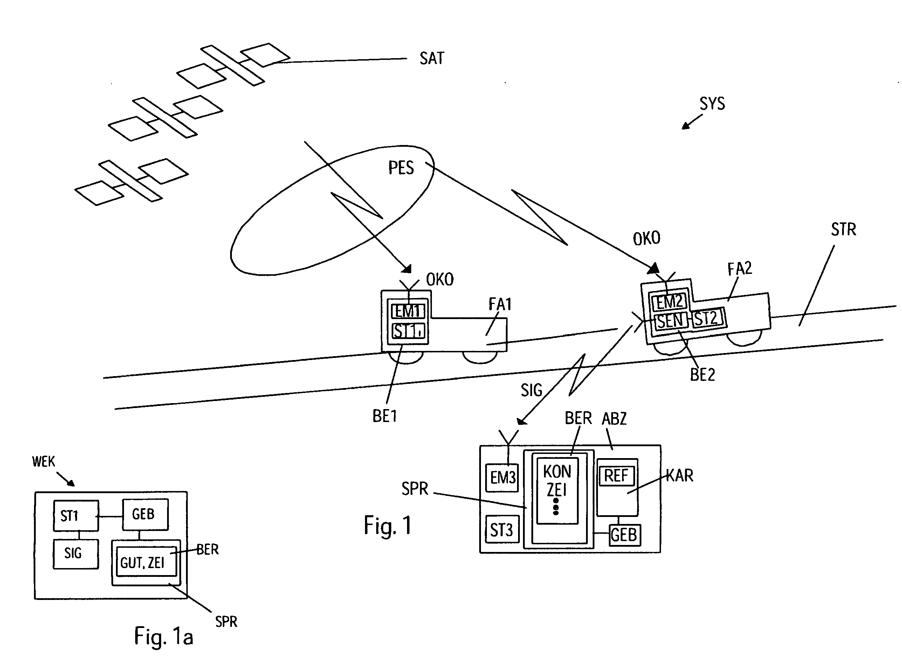

Gemäß Fig. 1 weist ein erfindungsgemäßes Mautsystem SYS, bevorzugterweise ein duales Mautsystem, zur Ortung eines Fahrzeuges FAR ein Positionserfassungssystems PES auf, beispielsweise das bekannte "Global Positioning Systems" oder kurz GPS-System.

Unter dualem Mautsystem wird in diesem Dokument, wie bereits oben erwähnt, ein Mautsystem verstanden, welches sowohl eine Entrichtung der Mautgebühren ohne eine Kommunikation mit einem fahrzeugexternen Abrechnungszentrum ABZ direkt in einer eigens dafür eingerichteten Bemautungsvorrichtung BE1 des Fahrzeuges FAR, als auch eine Bezahlung der Mautgebühren über ein Abrechnungszentrum ABZ ermöglicht, wobei das Fahrzeug in dem zweiten Fall eine Bemautungsvorrichtung BE2 aufweisen muss die zur Kommunikation mit dem Abrechnungszentrum ABZ eingerichtet ist.

Zur Ermittlung ihrer aktuellen Orts-Koordinaten OKO weisen die Fahrzeuge FA1, FA2 je eine Bemautungsvorrichtung BE1, BE2 mit je einer Empfangseinheit EMP auf, die dazu eingerichtet ist, mit dem Positionsermittlungssystem PES, bevorzugterweise einem Satellitennavigationssystem, Positionsdaten zu empfangen. Anhand der Positionsdaten werden von einer Steuerung ST1, ST2 der jeweiligen Bemautungsvorrichtung BE1, BE2 die aktuellen Orts-Koordinaten berechnet. Handelt es sich bei dem Positionsermittlungssystem PES um das GPS-Mautsystem, so können die Bemautungsvorrichtungen BE1, BE2 zur Ermittlung der Positionsdaten bzw. Orts-Koordinaten je ein GPS-Modul aufweisen. Zur Strecken- bzw. Positionsbestimmung mittels GPS siehe beispielsweise: "Umgebungserfassung auf Basis lernender digitaler Karten zur vorausschauenden Konditionierung von Fahrerassistenzsystemen"; Michael Schraut; Dissertation an der Fakultät für Elektrotechnik und Informationstechnik der technischen Universität München.

Anhand der von der erfindungsgemäßen Bemautungsvorrichtung BE1 ermittelten Orts-Koordinaten OKO erfolgt auf die im folgenden beschriebene Art die Feststellung, ob die befahrene Strecke STR mautpflichtig ist.

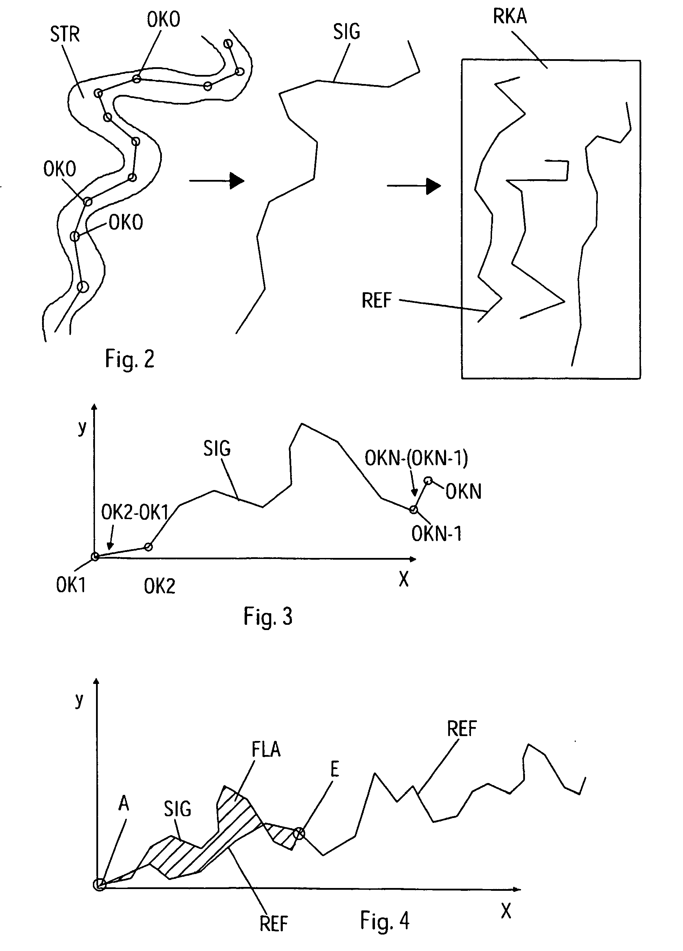

Aus den erhaltenen Orts-Koordinaten OKO kann gemäß Fig. 2 in den Steuerungen ST1, ST2 der fahrzeugseitigen Bemautungsvorrichtungen BE1, BE2 in vorgebbaren Intervallen für die jeweils befahrene Strecke STR eine charakteristische Signatur SIG, beispielsweise in Form von Polygonzügen, auf welchem die ermittelten Orts-Koordinaten OKO liegen, berechnet und zur Feststellung, ob es sich um eine mautpflichtige Strecke handelt, mit Strecken einer Referenzkarte RKA bzw. Referenzsignaturen REF, die beispielsweise ebenfalls in Form von Polygonzügen vorliegen, auf Ähnlichkeit bzw. Übereinstimmung verglichen werden. Die Intervalle in denen die Signatur SIG berechnet wird, kann von einem Mautsystembetreiber vorgegeben werden. Die von der erfindungsgemäßen Bemautungsvorrichtung BE2 ermittelten Orts-Koordinaten OKO können über eine Sendeeinheit SEN an eine Empfangseinheit EM3 eines fahrzeugexternen Abrechnungszentrums ABZ übermittelt werden, welches eine Steuerung ST3 aufweisen kann, die dazu eingerichtet ist, von der Empfangseinheit EM3 die Orts-Koordinaten zu empfangen und die Signatur SIG der befahrenen Strecke STR zu berechnen und zu ermitteln, ob diese Strecke STR mautpflichtig ist.

Gemäß Fig. 3 können die Relativpositionen der Ortskoordinaten OKO zueinander, d. h. die durch zwei aufeinanderfolgende Ortskoordinaten OK1- OKN definierten Richtungsvektoren, das formgebende Charakteristikum der Signatur SIG sein, wenn diese in Form eines Polygonzuges gebildet wird. Natürlich kann die Signatur SIG auch durch andere Parameter der Strecke STR bestimmt sein, beispielsweise mittlere Höhendifferenz bzw. Höhenprofil, mittlerer Krümmungsradius bzw. Verlauf des Krümmungsradius der Strecke STR etc. Wesentlich ist lediglich, dass die Signatur SIG für die befahrene Strecke STR charakteristisch ist und eine Überprüfung, ob es sich um eine mautpflichtige Strecke handelt, erlaubt. Dabei werden nicht wie bei den bekannten Bemautungsverfahren die Positionen der ermittelten Ortskoordinaten OKO in einer Karte bestimmt, sondern aus einer Anzahl von Ortskoordinaten werden für die befahrenen Strecken charakteristische Signaturen SIG berechnet.

Nach Fig. 4 liegen sowohl die Referenzsignatur REF als auch die Signatur SIG in digitaler Form vor, wobei die Referenzsignatur REF mehr Datenwerte enthalten kann als die Signatur SIG, da ja eine gesamte mautpflichtige Referenzstrecke in Form einer Referenzsignatur REF vorliegen kann, während die Signatur SIG in vorgebbaren Zeitintervallen berechnet werden kann, weshalb es sein kann, dass die aktuell berechnete Signatur SIG nur einem Abschnitt der gesamten befahrenen Strecke entspricht.

Zum Vergleich von Signatur SIG und Referenzsignatur REF können beispielweise, falls die Signatur SIG und die Referenzsignatur REF in Form von Polygonzügen vorliegen, Anfangs und Endpunkt der Signatur SIG mit je einem Punkt der Referenzsignatur REF zur Deckung gebracht werden. Dieser Vorgangsweise liegt die Annahme zugrunde, dass die Signatur SIG und nur mit jenen Abschnitten der Referenzsignatur REF gleich bzw. ähnlich ist, deren Anfangs- und Endpunkte mit den Anfangs- und Endpunkten der Signatur SIG zur Deckung gebracht werden können. Die Signatur SIG kann zu diesem Zweck entlang der durch die Referenzsignatur REF vorgegebenen Kurve unter Einhaltung bewegt werden. Wird ein Abschnitt der Referenzsignatur REF ermittelt, in welchem die Anfangs- A und Endpunkte E der Signatur SIG mit Punkten der Referenzsignatur REF zur Deckung gebracht werden können, kann der Betrag der von der Signatur SIG und der Referenzsignatur REF begrenzten Fläche FLA berechnet werden. Ist die Signatur SIG mit einem Abschnitt einer mautpflichtigen Referenzstrecke identisch, so wird der Betrag der von der Referenzsignatur REF und der Signatur SIG eingeschlossenen Fläche FLA nahe null. Um trotz eventuell auftretender Messfehler eine zuverlässigen Vergleich zwischen der Signatur SIG und den Referenzsignaturen REF zu ermöglichen, kann eine Schranke für den Betrag der von der Signatur SIG und der Referenzsignatur REF sowohl für die eingeschlossenen Fläche FLA als auch für eine maximal erlaubten Abweichung definiert werden. Unterschreitet der Betrag der eingeschlossenen Fläche FLA und die maximale Abweichung diese Schranken, so kann die Signatur SIG als identisch mit der Referenzsignatur REF bzw. dem betreffenden Abschnitt der Referenzsignatur REF betrachtet und die befahrene Strecke STR als mautpflichtig eingestuft werden. Zur Bestimmung ob die befahrene Strecke mautpflichtig ist, wird die Signatur SIG mit allen dem Mautsystem bekannten Referenzsignaturen REF mautpflichtiger Strecken verglichen, kommen mehrere mautpflichtige Strecken in Frage die befahrene zu sein, so wird jene Strecke deren Referenzsignatur die höchste Übereinstimmung mit der Signatur SIG aufweist, als die befahrene Strecke angesehen. Die oben beschriebene Vorgangsweise stellt nur eine von vielen Möglichkeiten dar die Signatur SIG zu bilden und mit Referenzsignaturen REF mautpflichtiger Strecken zu vergleichen. Weitere Verfahren bzw. Vorrichtungen zur Durchführung eines Vergleiches von Mustern bzw. Objekten auf Ähnlichkeit bzw. zu Ortungszwecken sind dem Fachmann in großer Zahl bekannt.

So können die erhaltenen Orts-Koordinaten OKO beispielsweise auch als Realisierung einer komplexen Zufallsvariablen betrachtet werden, das Abfahren ihrer Trajektorie dementsprechend als stochastischer Prozess, mit den üblichen Annahmen bezüglich Ergodizität, etc. Dieser aufgrund der zu diskreten Zeitpunkten gemachter Positionsmessungen zeitdiskrete Prozess kann beispielsweise mittels Kalmanfilterung gegenüber Messwertausfällen als Folge eines unzureichenden Empfanges von Positionsdaten robuster gemacht werden.

Weiters kann dem soeben erwähnten Prozess, falls die Positionsdaten fehlerbehaftet sind, ein Mobilitätsmodell zugrunde gelegt werden, das die durch die Positionsbestimmung verursachte Abweichung von der unbekannten "Solltrajektorie" durch additives, gaußsches, weißes Rauschen modelliert. Der aufgrund der Referenzkarte KAR abzuleitende Referenzprozess wird ähnlich modelliert, die Ungenauigkeit der Referenzkarte KAR wird hierbei auch als Rauschen betrachtet.

Diese beiden Prozesse können mit aus der digitalen Signalverarbeitung bekannten Methoden zur Spektral oder Zeitreihenanalyse bearbeitet werden. Es können auch Hypothesentests zum Einsatz kommen, beispielsweise kann aufgrund der Eigenwertverteilung einer Kovarianzmatrix der beiden Prozesse oder aufgrund eines speziell ausgeprägten Spektrums auf eine Identität der gefahrenen Strecke mit der mautpflichtigen Referenzstrecke geschlossen.

Man kann das soeben ebenfalls beispielhaft erwähnte Verfahren auch als eine Abbildungsvorschrift mit statistischer Fehlerbehandlung betrachten, bei welchem die verdichteten, charakteristischen Eigenschaften, die Signaturen SIG bzw. Referenzsignaturen REF, der gefahrenen Strecke und einer Referenzstrecke miteinander verglichen werden. Anhand charakteristischer Merkmale der Trajektorie der gefahrenen Route, der Signatur SIG, wird hierbei die Übereinstimmung mit einer dem Mautsystem bekannten Strecke bzw. Referenzsignatur REF geprüft, wobei jeder dem Mautsystem bekannten Referenzstrecke bzw. jeder Referenzsignatur REF eine vorgebbare Mautgebühr zugewiesen sein kann.

Ein Vorteil dieser systematischen, auf statistischen Methoden beruhenden Vorgangsweise ist auch die Möglichkeit bei fehlerbehafteten Positionsdaten bzw. Ortskoordinaten OKO, den Restfehler abzuschätzen, bzw. eventuelle Messfehler zu berücksichtigen. Sind die aktuellen Positionsmessungen und Kartenreferenzen nicht fehlerbehaftet, also unverrauscht, so kann eine beliebige bijektive Abbildung verwendet werden, die eine Informationsverdichtung vornimmt

Es ist ein Vorteil der Signaturberechnung, dass keine permanente Ortung des Fahrzeuges FAR notwendig ist, um festzustellen, ob es sich auf einer mautpflichtigen Strecke befindet Im Prinzip würde es genügen, einmal eine Signatur SIG für eine befahrene Strecke STR zu berechnen, beispielsweise anhand der in einem Zeitraum von fünf Minuten gemessenen Orts-Koordinaten OKO, um feststellen zu können, ob sich das Fahrzeug FAR auf einer mautpflichtige Strecke befindet. Zur Bestimmung der gefahrenen Strecke STR ist es daher nicht erforderlich die Genauigkeit bekannter Ortungsverfahren zu erreichen. Da keine exakte Positionsbestimmung notwendig ist, sondern nur eine ja/nein Entscheidung darüber getroffen werden soll, ob ein Fahrzeug zu einem bestimmten Zeitpunkt bzw. in Zeitraum auf einer mautpflichtigen Strecke ist bzw. war.

Wie bereits oben erwähnt, kann der Mautsystembetreiber je nach gewünschter Ortungsgenauigkeit die Intervalle, in denen die Signatur SIG berechnet werden sollen, vorgeben.

Die Referenzstrecken bzw. die Referenzkarte RKA können bei dem dualen Mautsystem gemäß Fig. 1 in einem Speicher einer zweiten Art von Bemautungsvorrichtung BE2, welche wie weiter unten genauer erläutert als Wertkarte bezeichnet wird, oder in einem fahrzeugexternen Abrechnungszentrum ABZ abgelegt sein, welches dazu eingerichtet ist, mit der erfindungsgemäßen Bemautungsvorrichtung BE1, die, wie weiter unten erwähnt, als Berechnungseinheit OBU bezeichnet wird, eine Kommunikationsverbindung aufzubauen, wobei jeder Referenzstrecken bzw. Referenzsignaturen REF eine vorgebbare Mautgebühr GEB zugeordnet sein kann.

Zur Bestimmung ob eine Strecke STR mautpflichtig ist, kann im Rahmen des dualen Mautsystems entweder in der Bemautungsvorrichtung BE1 - der Wertkarte - oder dem Abrechnungszentrum ABZ ein Vergleich zwischen der befahrenen und einer durch die Referenzkarte KAR vorgegebenen Strecke auf Ähnlichkeit erfolgen, wird dabei, wie bereits oben beschrieben, eine Entscheidungsschwelle überschritten, so wird die befahrene Strecke als diejenige mautpflichtige Referenzstrecke REF angesehen, mit welcher die höchste Übereinstimmung vorliegt.

Durch den Vergleich der Signatur SIG mit einer dem Mautsystem SYS bekannten Referenzstrecke bzw. Referenzsignatur REF lässt sich nicht nur die mautpflichtige Strecke STR sondern auch die Länge der von dem Fahrzeug FAR auf einer mautpflichtigen Strecke STR tatsächlich zurückgelegten Distanz DIS eindeutig bestimmen.

Ist die ermittelte Strecke STR mautpflichtig, so kann anhand einer in einem Speicher SPR der Bemautungsvorrichtung BE2 - der Wertkarte (Fig. 1a) oder dem Abrechnungszentrum ABZ abgelegten Benutzungsberechtigung BER überprüft, ob das Fahrzeug FAR zur Benutzung dieser Strecke STR berechtigt ist.

Prinzipiell kann man, wie bereits angedeutet, in dem dualen Mautsystem SYS zwei Bemautungsarten unterscheiden. Die eine Bemautungsart besteht darin, dass die Benutzerberechtigung BER in einem Speicher SPR der Bemautungsvorrichtung BE1 abgelegt ist. Die Berechnung der Signatur SIG und ein Vergleich mit den Referenzsignaturen REF mautpflichtiger Strecken wird dabei von der Bemautungsvorrichtung BE1 an Bord des Fahrzeuges FAR durchgeführt. Bei dieser Ausführungsform braucht die entsprechende Bemautungsvorrichtung BE1, im folgenden als Wertkarte WEK bezeichnet, keine Kommunikationsverbindung mit einem fahrzeugexternen Abrechnungszentrum ABZ aufzubauen, da sie alle Informationen, die sie zur Berechnung und Abrechnung von Mautgebühren benötigt bereits zur Verfügung hat bzw. von dem Positionsermittlungssystem PES erhält.

Die Benutzungsberechtigung BER der Wertkarte WEK kann gemäß Fig. 1a als Guthaben GUT realisiert und in einem Speicher SPR der Wertkarte WEK abgelegt sein, wobei eine Steuerung STE vorgesehen ist, die dazu eingerichtet sein kann, von dem Guthaben GUT anfallende Mautgebühren GEB abzubuchen. Ist das Guthaben GUT aufgebraucht, so darf das Fahrzeug FAR keine mautpflichtigen Strecken STR mehr benutzen.

Bei der Benutzungsberechtigung BER der Wertkarte WEK muss es sich aber nicht ausschließlich um ein Guthaben GUT handeln. Die Benutzungsberechtigung BER kann beispielsweise auch als eine in dem Speicher SPR der Wertkarte abgelegte Zeitkarte ZEI, die zur Benutzung vorgebbarer, mautpflichtiger Strecken STR in einem gewissen Zeitraum berechtigt, etc. ausgeführt sein.

Besteht die Benutzungsberechtigung BER darin, eine vorgebbare Anzahl an Kilometern auf mautpflichtigen Strecken STR zurücklegen zu dürfen, so kann die Anzahl der bereits zurückgelegten Kilometer von einem in der Speichereinheit SPR der Wertkarte abgelegten Streckenguthaben abgebucht werden.

Die Realisierung von zeitlich begrenzten Benutzungsberechtigungen BER in der Wertkarte WEK lässt sich beispielsweise dadurch verwirklichen, dass der Signatur SIG ein Zeitstempel ZST beigefügt wird. Anhand der Signatur SIG und des Zeitstempels ZST können dann sowohl die benutzte, mautpflichtige Strecke als auch der Benutzungszeitpunkt eindeutig festgestellt werden, wobei eine Überprüfung, ob das Fahrzeug FAR zu diesem Zeitpunkt auf der durch die Signatur SIG bestimmten Strecke STR fahren darf oder nicht, anhand des Zeitstempels ZST durchgeführt werden kann.

Auf diese Weise wird trotz nicht vorhandener Kommunikation mit einer Mautleitstelle die ordnungsgemäße Entrichtung der Mautgebühr GEB gewährleistet.

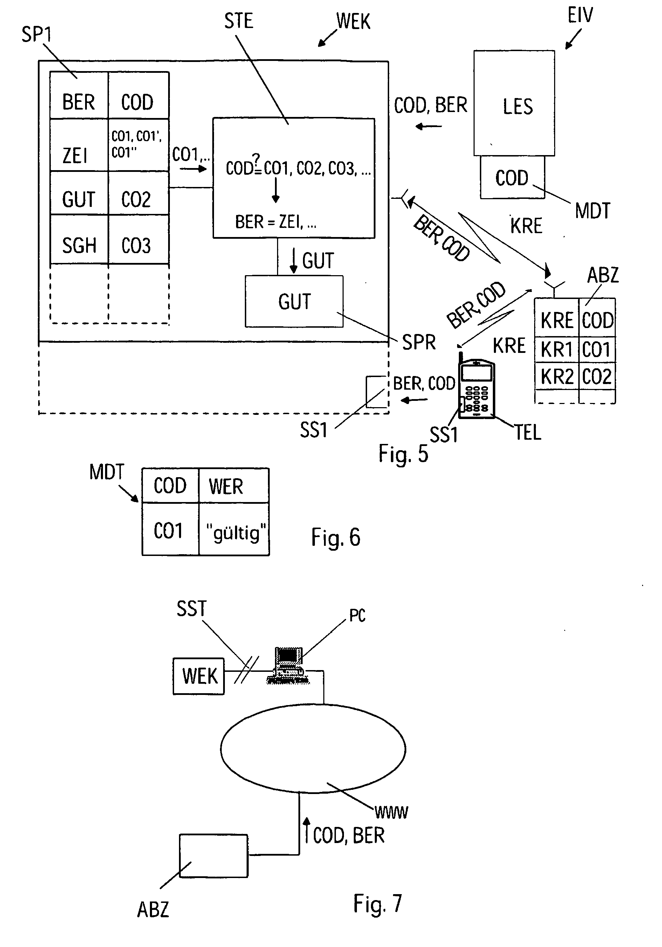

Die von einem Fahrzeuginhaber gewünschte und/oder vom Mautbetreiber vorgeschriebene Art der Benutzungsberechtigung BER (Guthaben, Zeitkarte, Streckenguthaben, Terminbindung etc.) kann beispielsweise mittels eines Codes COD in die Wertkarte WEK übertragen bzw. aktiviert werden. Jeder Art von Benutzungsberechtigung BER kann dabei in der Wertkarte ein vorgebbarer Code CO1, CO2, CO3 zugewiesen sein (Fig. 5). So kann beispielsweise ein erster Code CO1 einer Zeitkarte ZEI für alle mautpflichtigen Strecken STR in einem vorgebbaren Gebiet zugeordnet sein, während ein anderer Code CO2 ein Guthaben GUT um einen vorgebbaren Betrag auflädt oder ein dritter Code CO3 ein Streckenguthaben SGH um einen vorgebbaren Betrag erhöht etc.

Natürlich können auch verschiedene Arten von Benutzungsberechtigungen BER gleichzeitig in der Wertkarte abgelegt sein und nach Bedarf aktiviert werden. Liegt beispielsweise für eine Strecke die Benutzungsberechtigung BER in Form einer Zeitkarte ZEI, welche zur Benutzung der mautpflichtigen Strecke STR in einem bestimmten Zeitraum berechtigt, vor so kann parallel dazu auch ein Guthaben GUT vorgesehen sein. Benutzt das Fahrzeug FAR die Strecke STR, für welche eine gültige Zeitkarte ZEI existiert, kann der Fahrer die Abbuchung über das Guthaben GUT deaktivieren und die Zeitkarte ZEI elektronisch "vorweisen". Dieses Vorweisen der Zeitkarte ZEI entspricht im wesentlichen einer

Änderung des Abrechnungsmodus in der Wertkarte und kann durch Betätigen einer Eingabeeinheit der Wertkarte, beispielsweise einer Taste, vorgenommen werden.

Nach Erhalt des Codes COD kann die Steuerung STE der Wertkarte WEK durch Vergleich des von dem Benutzer erworbenen Codes COD mit den in der Speichereinheit SP1 abgelegten Codes CO1, CO2, C03 die entsprechende Benutzungsberechtigung BER identifizieren und freischalten bzw. aktivieren.

Sind in der Wertkarte WEK eine Zeitkarte ZEI für eine bestimmte Strecke und ein Guthaben GUT aktiviert, so kann der Fahrer die Abbuchung über das Guthaben GUT deaktivieren und die Zeitkarte ZEI elektronisch "vorweisen" sobald er auf die Strecke, für welche die Zeitkarte existiert auffährt.

Dieses Vorweisen der Zeitkarte ZEI entspricht im wesentlichen einer Änderung des Abrechnungsmodus in der Wertkarte WEK und kann durch Betätigen einer Eingabeeinheit der Wertkarte, beispielsweise einer Taste, vorgenommen werden. Prinzipiell ist jede Kombination von Benutzerberechtigungen BER möglich.

Einer Benutzerberechtigung BER in Form eines Guthaben GUT können mehrere Codes CO1, CO1', CO1" die unterschiedlichen Geldbeträgen entsprechen, zugeordnet sein. Nach Bezahlung des entsprechenden Betrages kann der diesem Betrag entsprechende Code CO1, CO1', CO1" in die Wertkarte übertragen und das Guthaben GUT um diesen Betrag erhöht werden.

Analog zu dem eben gesagten können auch die anderen Formen der Benutzungsberechtigung BER für die Wertkarte WEK erworben werden. D. h. gegen Entrichtung des einer Benutzungsberechtigung BER zugeordneten Betrages an den Mautbetreiber von Seiten des Fahrzeugbenutzers wird der "Freischaltcode" für diese Form der Benutzungsberechtigung BER erworben und in die Wertkarte WEK übertragen.

Die Übertragung des Codes COD in die Wertkarte WEK kann beispielsweise mittels einer mit der Wertkarte WEK leitungs- oder nicht leitungsgebunden verbundenen Eingabevorrichtung EIV erfolgen. Beispiele für eine leitungsgebundene Verbindung zwischen der Eingabevorrichtung EIV und der Wertkarte WEK wären Kupferdraht, Glasfaser, etc... Beispiele für eine nicht leitungsgebundene Verbindung sind Funk, Infrarotübertragung, Laser, etc.

Um ein missbräuchliches Aufladen einer Benutzungsberechtigung BER in die Berechnungseinheit BEE zu verhindern, kann der Code CO1, CO2, CO3 verschlüsselt und in einer für den Benutzer nicht erkennbaren Form in die Wertkarte WEK übertragen werden.

Der Code COD kann auf einem mobilen Datenträger, beispielsweise einer Magnetkarte, etc, gespeichert sein. Wobei zur Übertragung der Benutzerberechtigung BER bzw. des Codes COD in die Wertkarte WEK die Eingabevorrichtung EIV als Lesegerät LES für mobile Datenträger ausgeführt ist. Um eine missbräuchliche Wiederverwendung des mobilen Datenträgers zu verhindern, kann das Lesegerät LES dazu eingerichtet sein, den Übertragungsvorgang des Codes COD in die Wertkarte WEK mit einer Entwertung des mobilen Datenträgers zu beenden. Diese Entwertung kann beispielsweise darin bestehen, dass die auf dem mobilen Datenträger enthaltene Information durch das Lesegerät gelöscht wird oder dadurch, dass ein Wert WER der die Gültigkeit der Karte angibt von "gültig" auf "ungültig" gesetzt wird (Fig. 6).

Eine andere Möglichkeit der Übertragung des Codes COD in die Wertkarte WEK besteht darin, dass er nach Bezahlung des ihm zugeordneten Betrages von einer vom Mautbetreiber autorisierten Person über eine Eingabevorrichtung der Berechnungseinheit BEE, beispielsweise eine Tastatur oder einen Touchscreen, manuell in die Berechnungseinheit BEE eingegeben wird.

Weiters kann der Code COD auch über ein Funknetz, bevorzugterweise das GSM-Netz, in die Wertkarte übertragen werden. Hierzu kann die Wertkarte ein Funk-Modul, beispielsweise ein GSM-Modul, aufweisen bzw. mit einem derartigen Modul verbunden sein, über welches auf Anforderung, z. B. durch Aktivieren einer vorgebbaren Taste bzw. Tastenkombination einer Tastatur der Wertkarte, eine Verbindung mit dem Abrechnungszentrum ABZ des Mautstellenbetreibers hergestellt werden kann. Nach erfolgtem Verbindungsaufbau kann von dem Fahrzeugbenutzer die gewünschte Benutzerberechtigung BEE ausgewählt werden, beispielsweise unterstützt durch ein akustisches Menü, wie es z. B. bei Wertkarten Mobilfunkgeräten üblich ist. Die Bezahlung der Benutzungsberechtigung BER bzw. des Codes COD kann beispielsweise über Kreditkarte oder über eine dem Mautbetreiber ausgestellte Einzugsermächtigung für ein Konto des Fahrzeugbenutzers erfolgen.

Nach Auswahl der gewünschten Benutzungsberechtigung BER und ihrer Bezahlung kann die Übertragung des Codes COD von dem Abrechnungszentrum ABZ in die Wertkarte erfolgen.

Die Bezahlung der Benutzerberechtigung BER kann, wie von GSM-Wertkarten-Mobilfunktelefonen her bekannt, durch den Erwerb einer Maut-Wertkarte erfolgen, auf der zumindest ein der jeweiligen Art von Benutzerberechtigung BER zugeordneter Kreditcode KRE, KR1, KR2 aufgedruckt ist. Nach Verbindungsaufbau mit dem Abrechnungszentrum ABZ über das GSM-Netz kann dieser Kreditcode KRE, KR1, KR2 nach Eingabe in die Berechnungseinheit BEE, beispielsweise über eine Tastatur der Wertkarte, von der Wertkarte an das Abrechnungszentrum ABZ übertragen werden. Nach Erhalt des Kreditcodes KRE überträgt das Abrechnungszentrum ABZ die diesem Kreditcode KRE, KR1, KR2 zugeordnete Benutzungsberechtigung BER, beispielsweise in Form eines Codes COD, wie bereits oben beschrieben.

Der Verbindungsaufbau zur Übertragung des Kreditcodes KRE, KR1, KR2 und der Benutzerberechtigung BER kann auch zwischen der Eingabevorrichtung EIV und dem Abrechnungszentrum ABZ erfolgen. Die Eingabevorrichtung EIV kann beispielsweise ein Mobilfunktelefon TEL sein, über welches der Kreditcode KRE, KR1, KR2 an das Abrechnungszentrum ABZ übertragen wird, wobei die entsprechende Benutzerberechtigung BER in Form des Codes COD nach Erhalt des Kreditcodes KRE, KR1, KR2 von dem Abrechnungszentrum ABZ an das Mobilfunktelefon übermittelt wird. Über eine Schnittstelle SS1, beispielsweise eine Infrarotschnittstelle, kann dann die Benutzerberechtigung BER auf Anforderung von dem Mobilfunktelefon TEL in die Wertkarte übertragen werden.

Gemäß Fig. 7 kann die Übertragung der Benutzungsberechtigung BER bzw. des Codes CO1, CO2, CO3 in die Wertkarte aber auch über einen mit einem Datennetz WWW, bevorzugt mit dem Internet, verbundenen Computer PC erfolgen. Hierbei kann der Code CO1, CO2, CO3 auf Anforderung von einem Abrechnungszentrum ABZ eines Mautstellenbetreibers via Internet an den Computer PC übermittelt werden, welcher dazu eingerichtet ist den Code CO1, CO2, CO3 in die Wertkarte zu übertragen, beispielsweise über eine USB-Schnittstelle. Die Bezahlung der Benutzungsberechtigung BER kann, so wie bei der Übertragung des Codes COD über ein Funknetz, mittels Kreditkarte etc. erfolgen.

Um trotz nicht vorhandener Kommunikation der Wertkarte WEK mit einer Mautleitstelle eine ortsabhängige Abbuchung von dem Guthaben GUT vornehmen zu können, kann die aktuell ermittelte GPS-Position mit einer in einem Speicher der Wertkarte WEK abgelegten Karte von virtuellen Mautstellen verglichen und bei Durchfahren der virtuellen Mautstellen die bisher angefallene, mittels der GPS-Messung ermittelten Mautschuld von dem Guthaben GUT abgebucht werden. Vorteilhafterweise ist jedoch auch in solchen Fällen die Berechnung einer Streckensignatur vorzuziehen.

In manchen Fällen kann es sein, dass die Genauigkeit der Erfassung von aktuellen Orts-Koordinaten OKO des Fahrzeuges FAR bei Verwendung der Wertkarte mittels des GPS-Mautsystems nicht ausreicht. Es könnte beispielsweise zu einer irrtümlichen Verrechnung von Mautgebühren GEB kommen, wenn beispielsweise eine mautpflichtige und eine gebührenfrei zu benutzende Straße in großer örtlicher Nähe nebeneinander verlaufen. Deshalb kann die Eingabe des Auf- bzw. Abfahrens auf eine mautpflichtige Strecke STR, d. h. die Aktivierung der Wertkarte, durch den Lenker des Fahrzeuges FAR durch betätigen einer hierfür vorgesehenen Eingabeeinrichtung, beispielsweise einer Taste an der Wertkarte, erfolgen. Dadurch kann ähnlich wie beim Entwerten einer Straßenbahnfahrkarte der Fahrzeuglenker zur Mitwirkung verpflichtet werden. Weiters können dadurch die Genauigkeitsanforderungen an die Ortsbestimmung auf die durch ein GPS-Mautsystem erreichbare Genauigkeit eingeschränkt werden ohne eine Korrekturdaten übertragen zu müssen.

Vorteilhafterweise kann die Wertkarte als Chipkarte ausgeführt sein, die in ein Autoradio eingeführt werden kann, wobei die Bedienung, d. h. die Aktivierung und Deaktivierung der Wertkarte, über das Autoradio erfolgen kann.

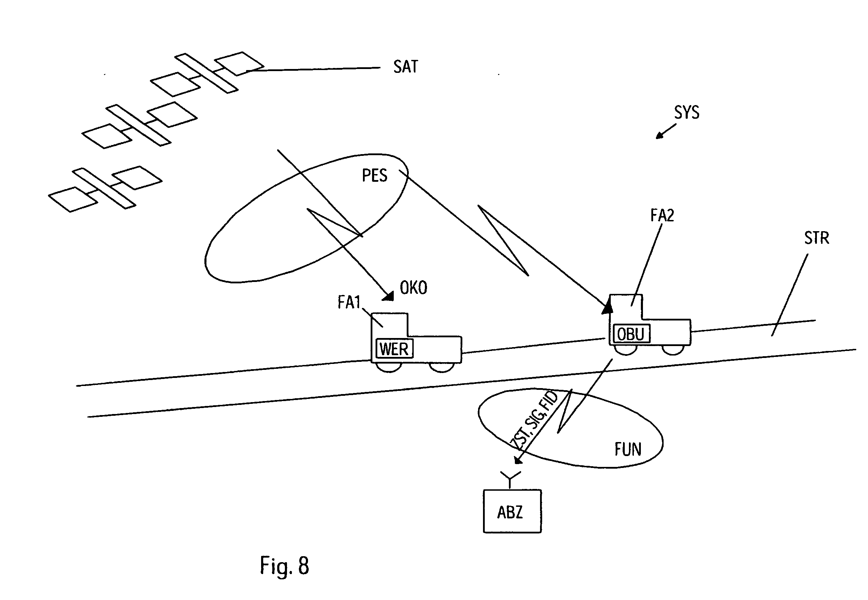

Eine zweite Bemautungsart, die mit dem dualen Mautsystem realisierbar ist, sieht vor, dass gemäß Fig. 8 die Benutzungsberechtigung BER in dem Abrechnungszentrum ABZ abgelegt ist. Bevorzugterweise handelt es sich hierbei um ein dem Fahrzeug FAR zugeordnetes Konto KON. Bei dieser Bemautungsart findet im Gegensatz zur Wertkarte eine Kommunikation zwischen dem Fahrzeug FAR und der erfindungsgemäßen Bemautungsvorrichtung BE2 zur Bestimmung der aktuellen Orts-Koordinaten des Fahrzeuges FAR und einem Abrechnungszentrum ABZ statt. Im folgenden wird die erfindungsgemäße, kommunikationsfähige Bemautungsvorrichtung BE2 als Berechnungseinheit OBU bezeichnet.

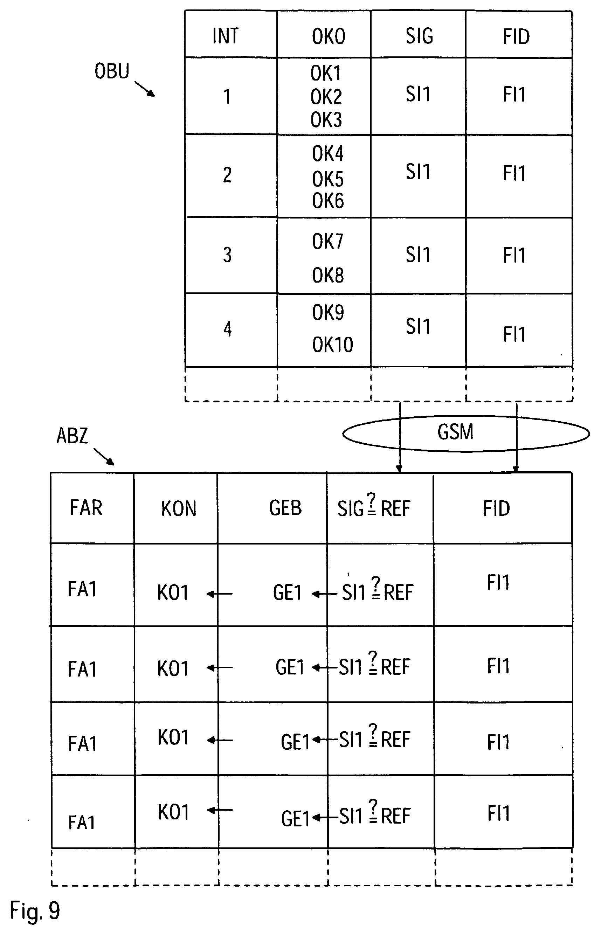

Gemäß Fig. 9 kann die Signatur SIG, SI1 in der erfindungsgemäßen Berechnungseinheit OBU in vorgebbaren Intervallen berechnet und über ein Funknetz FUN, beispielsweise ein GSM oder UMTS-Netz, etc. an das Abrechnungszentrum ABZ übermittelt werden. In dem Abrechnungszentrum ABZ kann die Ermittlung der zu entrichtenden Mautgebühr GEB, GE1, wie bereits oben erwähnt, durch Vergleich der Signatur SIG der gefahrenen Strecke mit den Referenzsignaturen REF mautpflichtiger Strecken erfolgen. Die Abbuchung von einem dem Fahrzeug FAR oder der Berechnungseinheit OBU zugeordneten Konto KON, KO1 kann somit falls die von dem Fahrzeug FAR befahrene Strecke mautpflichtig ist, anhand der Signatur SIG, SI1 und einer mitübertragenen Fahrzeug- bzw. Berechnungseinheitsidentifikation FID, FI1 sofort "online" durchgeführt werden.

Eine weitere Möglichkeit besteht darin, dass über einen vorgebbaren Zeitraum hinweg, beispielsweise ein Monat, die ermittelten Mautgebühren GEB gesammelt und zu einem späteren Zeitpunkt die angefallene Mautschuld von dem Konto KON, KO1 in dem Abrechnungszentrum ABZ abgebucht wird. Natürlich kann die Benutzungsberechtigung BER die in dem Abrechnungszentrum ABZ abgelegt ist, analog zu der Wertkarte in Form einer Zeitkarte ZEI etc. realisiert sein.

Die Berechnung der Signatur SIG kann auch in dem Abrechnungszentrum ABZ erfolgen, hierzu können die Ortskoordinaten OKO an das Abrechnungszentrum ABZ übermittelt werden. Da die Berechnung der Signatur SIG, wie bereits oben erwähnt, in vorgebbaren Intervallen erfolgen kann, ist es auch in diesem Fall nicht notwendig, permanent Positionsdaten an das Abrechnungszentrum zu übermitteln. Daher kann das Datenaufkommen durch die Berechnung der Signatur SIG in dem erfindungsgemäßen Mautsystem wesentlich verringert werden.

Erfolgt eine Online-Abbuchung der Mautgebühren GEB von dem Konto KON und ist keine Mitwirkung von Seite des Fahrers in Form einer Aktivierung der Berechnungseinheit OBU bei Auffahrt auf eine mautpflichtige Verkehrsfläche, wie bei der Wertkarte, vorgesehen, so kann es notwenig sein, falls das verwendete Positionsermittlungssystem PES das GPS-Mautsystem ist, Positions-Korrekturdaten zu übertragen, um eine irrtümliche Verrechnung von Mautgebühren auszuschließen. Da es, wie bereits oben erwähnt, bei parallel zueinander verlaufenden Straßen zu einer irrtümlichen Verrechnung von Mautgebühren kommen kann. Die Positionskorrekturdaten können gemäß einem dGPS-Verfahren ermittelt und über ein Funknetz, beispielsweise das GSM-Netz, etc, an die Berechnungseinheit OBU übermittelt werden. Ein derartiges Verfahren zur Übertragung von Korrekturdaten ist beispielsweise aus der WO 94/12892 bekannt geworden. Zum Begriff des dGPS siehe auch die oben zitierte Dissertation an der Fakultät für Elektrotechnik und Informationstechnik der technischen Universität München bzw. "Geolocator ein GPS-basiertes Fahrzeugortungssystem; Bernhard Liedl; Diplomarbeit am Institut für Informationsverarbeitung und Mikroprozessortechnik der Johannes Kepler Universität Linz".

Zur Beweissicherung können Fahrverlaufspositionen bzw. die Signatur SIG der Strecke STR und etwaige Informationen über den Benutzungszeitpunkt, beispielsweise in Form von einem an die aktuell ermittelte Signatur SIG beigefügten Zeitstempel ZST, in einem Speicher der Wertkarte oder des Abrechnungszentrums ABZ abgelegt und im Bedarfsfall zur Verfügung gestellt werden. Das Anfügen eines Zeitstempels ZST an die Signatur SIG bietet hinaus den Vorteil, dass sich bei Realisierung der Benutzerberechtigung als Zeitkarte ZEI sehr leicht überprüfen lässt, ob die Zeitkarte noch gültig ist. Durch die Signatur SIG und den Zeitstempel ZST lässt sich ein eindeutiger Nachweis der Benutzung einer mautpflichtigen Strecke realisieren.

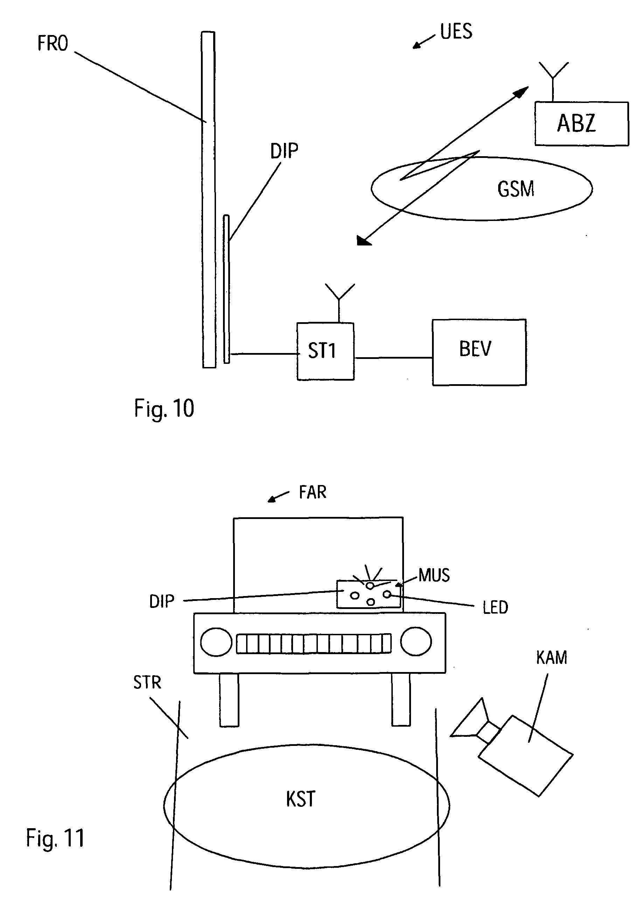

Gemäß Fig. 10 kann ein Überwachungssystem UES zur Überwachung des ordnungsgemäßen Betriebes des Mautsystems bzw. der Wertkarte und der Berechnungseinheit OBU vorgesehen sein. Das Überwachungssystem kann eine Steuerung ST1 sowie ein mit ihr verbundenes Display DIP aufweisen, welches dazu eingerichtet ist ein vorgebbares optisches Muster MUS darzustellen (Fig. 11). Das optische Muster MUS kann von dem aktuellen Betriebszustand der an Bord des Fahrzeuges FAR befindlichen Bemautungsvorrichtung BEV, d. h. der Wertkarte oder der Berechnungseinheit OBU abhängen. Die Steuerung ST1 des Überwachungssystems UES kann überwachen, ob eine gültige Benutzungsberechtigung BER in der Wertkarte oder dem Abrechnungszentrum vorhanden ist, oder ob die an Bord des Fahrzeuges befindliche Bemautungsvorrichtung BEV eingeschaltet ist, ab.

Zur Darstellung des Musters MUS in Abhängigkeit von dem Betriebszustand der Wertkarte kann die Steuerung ST1 den Zustand der Benutzungsberechtigung BER in der Wertkarte überprüfen, und ob die Wertkarte ein- oder abgeschaltet ist.

Handelt es sich bei der an Bord des Fahrzeuges befindlichen Bemautungsvorrichtung BEV um die Berechnungseinheit OBU, so kann die Steuerung ST1 des Überwachungssystems zur Feststellung, ob eine gültige Benutzerberechtigung BER vorhanden ist, mit dem Abrechnungszentrum ABZ Daten austauschen.

Die Steuerung ST1 steuert das Display DIP in Abhängigkeit von dem aktuellen Betriebszustand der Bemautungsvorrichtung BEV (Wertkarte bzw. Berechnungseinheit OBU) bzw. dem Vorhandensein einer Benutzerberechtigung an, auf welchem das dem aktuellen Betriebszustand entsprechende Muster MUS dargestellt wird. Zur Darstellung des Musters MUS kann das Display DIP z.B. Leuchtdioden LED bzw. Infarot-Leuchtdioden oder andere optische Signallisierungsmöglichkeiten aufweisen.

Ist keine gültige Benutzerberechtigung BER in der Wertkarte bzw. dem Abrechnungszentrum vorhanden, so wird ein für diesen Zweck vorgesehenes optisches Muster MUS, beispielsweise an der Fahrzeugfront FRO, dargestellt.

Auch unerlaubte Manipulationen des Fahrers an der Wertkarte bzw. an der Berechnungseinheit OBU können von der Steuerung ST1 erkannt werden.

So kann die Steuerung ST1 des Überwachungssystems dazu eingerichtet sein, bei mehrmaliger Eingabe eines falschen Codes COD für eine Benutzerberechtigung BER in die Wertkarte ein für diesen Zweck vorgesehenes Muster MUS auf dem Display darzustellen, beispielsweise eine leuchtende Leuchtdiode LED.

Um Manipulationen von Seiten des Fahrers zu verhindern, wird/kann nach einem in der elektronischen Bemautungseinrichtung BEV - der Wertkarte oder der Berechnungseinheit OBU- gespeicherten Zyklus das Muster MUS verändert werden. Im Fall der kommunikationsfähigen Berechnungseinheit OBU kann das Muster auch extern beispielsweise via GSM-Broadcast-Aufforderung gewechselt werden.

Die Eingabe des Auf- bzw. Abfahrens auf eine mautpflichtige Strecke STR, d. h. die Aktivierung der Wertkarte, kann durch den Lenker des Fahrzeuges FAR Betätigen einer hierfür vorgesehenen Eingabevorrichtung, beispielsweise einer Taste an einer Eingabeeinheit für die Wertkarte erfolgen.

Dadurch kann ähnlich wie beim Entwerten einer Straßenbahnfahrkarte der Fahrzeuglenker zur Mitwirkung verpflichtet werden.

Wird die Wertkarte von dem Fahrzeugbenutzer eingeschaltet und ist eine gültige Benutzungsberechtigung BER in ihrem Speicher SPR vorhanden, so erzeugt die Steuerung ST1 ein dementsprechendes optisches Muster MUS auf dem Display DIP, beispielsweise zwei leuchtende Leuchtdioden LED, während im ausgeschaltetem Zustand der Wertkarte ein diesen Zustand charakterisierendes Muster MUS erzeugt wird - beispielsweise emittiert in diesem Fall keine der Leuchtdioden LED Licht.

Für die Berechnungseinheit OBU, deren Benutzerberechtigung in dem Abrechnungszentrum abgelegt ist, gilt natürlich das Gleiche. Ist beispielsweise das Konto in dem Abrechnungszentrum ABZ des Fahrzeuges FAR um einen vorgebbaren Betrag überzogen bzw. der Kontoinhaber mit der Tilgung seiner Mautschuld in Verzug, so kann der Zustand des Kontos KON von "gültig" auf "ungültig" geändert werden. Wobei in diesem Fall von der Steuerung ST1 das für diesen Fall vorgesehenes Muster MUS auf dem Display darstellt.

Anhand des dargestellten Musters MUS kann also erkannt werden, ob der Fahrer des Fahrzeuges FAR ein potentieller oder tatsächlicher Mautpreller ist.

Bei Durchfahren einer festen Kontrollstation KST kann nun das dargestellte Muster MUS ausgewertet und als Auslösesignal für eine Nummerntafel-OCR verwendet werden. OCR steht hierbei für "Optical Charaketer Recognition" und meint bekannte Verfahren zur optischen Mustererkennung. Der Vorteil dieser Lösung besteht neben den geringen Kosten darin, dass nicht jedes Fahrzeug einer Nummemtafel-OCR zugeführt werden muss. (Infrarot-Muster können durch billige Interferenzfilter an einer Infrarot-Kamera KAM, bei entsprechend hoher Lichtleistung der LED's, mit einem sehr viel höheren Signalrauschverhältnis erkannt werden als Nummerntafeln mit rein passivem Nummerntafel-OCR. Die Erkennung einiger einfacher Muster ist ebenfalls mit viel höherer Zuverlässigkeit möglich.)

Das Überwachungssystem UES wird nicht zur Kommunikation eingesetzt, wie beispielsweise bei der WO 99/66455, sondern dient dazu, die Häufigkeit der aufwendigeren und unter den zu erwartenden Umgebungsbedingungen deutlich unzuverlässigeren Nummerntafel OCR zu verringern. Dadurch wird im Fall von zentral durchgeführter OCR das Datenaufkommen zwischen den ortsfesten Enforcementstationen und der OCR-Zentrale deutlich reduziert.

Eine mobile Überwachung kann ebenfalls über eine Infrarot-Kamera erfolgen. Ergänzend dazu kann auch über zusätzliche LED-Quellen im sichtbaren Bereich eine Vorselektion erfolgen. Es kann aber auch generell eine Signalisierung im sichtbaren Bereich erfolgen.

Innerhalb des Buchungsgebietes sind drei Arten von Fahrzeugen FAR anzutreffen:
1. Fahrzeuge FAR ohne oder mit ungültiger (manipulierter) IR/LED-Signatur, diese sind entweder Mautpreller, wie sie bei jeder beliebigen automatischen Mautmethodik prinzipiell möglich sind; oder diese sind Mautteilnehmer mit defekten Bemautungsvorrichtungen BEV, bzw. fehlender oder ungültiger Benutzungsberechtigungen BER, beispielsweise gesperrtem Konto KON oder aufgebrauchtem Guthaben GUT. Alle diese Teilnehmer können an entsprechenden Kontrollstationen (fest oder mobil) erkannt und nach festgelegten Regeln behandelt werden.
2. Fahrzeuge mit gültiger IR/LED Signatur, wobei das Verlassen eines Staatsgebietes erkannt und z. B. die Kommunikation der Bemautungsvorrichtung BER mit dem Abrechnungszentrum ABZ samt Bemautungsvorgang deaktiviert wird und nur mehr eine Positionsbestimmung erfolgt, oder auf das von der Basistechnologie her kompatible Mautsystem eines Nachbarlandes umgeschaltet wird.
3. Da die aktuelle Position des Fahrzeuges in der mitgeführten Berechnungseinheit BEE bekannt ist, und von dieser erkannt werden kann welcher Koordinatenpunkt diesseits oder jenseits der Grenze liegt, kann bereits vor einem Grenzübertritt auf einer mautpflichtigen Strecke rechtzeitig das aktuelle Muster aktiviert werden. Vorteilhafterweise ist um die Grenze eine Toleranzzone vorgesehen, in welcher eine Aktivierung der Berechnungseinheit nicht unbedingt erforderlich ist Erfolgt eine Weiterfahrt auf dem Staatsgebiet auf einer mautpflichtigen Verkehrsfläche, so erfolgt die Bemautung entsprechend dem erfindungsgemäßen Verfahren.

Ein weiteres Kontroll-Element kann, wie bereits oben erwähnt, auch die Signaturen SIG der befahrenen Strecken STR darstellen. Diese werden dazu nicht nach dem Echtzeitvergleich verworfen, sondern können zur Beweissicherung beispielsweise in der Bemautungsvorrichtung BEV oder in dem Abrechnungszentrum ABZ gespeichert werden. Die gespeicherten Daten können dabei nach einem Ringspeicherprinzip über einen vorgebbaren Zeitraum, beispielsweise 2 Monate, erhalten bleiben.

Es können auch laufend Signaturen SIG errechnet und samt Zeitstempel ZST und Status der Bemautungsvorrichtung BEV bzw. der Benutzerberechtigung gespeichert werden. Diese Daten können entweder beim nächsten Aufbuchungsvorgang der Wertkarte abgezogen werden oder bei der kommunikationsfähigen Berechnungseinheit OBU permanent oder in vorgebbaren Intervallen an eine Bemautungszentrale übermittelt und von dieser mit geeigneten Methoden (z. B. bekannte mit unmöglichen statistischen Bewegungsprofilen vergleichen etc.) bearbeitet werden, um Schwarzlisten oder andere interessierende Merkmale für den Betrieb des gesamten Mautsystems zu gewinnen.

Weiters ist es ein Verdienst der Erfindung, die Möglichkeit zu schaffen, auf ein online Kommunikationssystem, beispielsweise das GSM-Netz, mit einer fahrzeugexternen Mautleitstelle verzichten zu können. Wodurch eine sehr kostengünstige Realisierung des erfindungsgemäßen Verfahrens bzw. Mautsystems trotz Beibehaltung der virtuellen Bemautung realisiert werden kann. Ein weiterer Vorteil der Erfindung besteht darin, dass die von dem Gesetzgeber geforderte Gleichstellung von online (über die Berechnungseinheit OBU und das Abrechnungszentrum ABZ) und offline (über die Wertkarte WEK) bezahlenden Fahrzeugbetreibern innerhalb der selben Infrastruktur und somit auf einfache Weise ein "duales" Mautsystem verwirklicht werden kann.

## Patentansprüche

1. Mautsystem (SYS) mit einem Positionsermittlungssystem (PES) zur Ermittlung der Position eines Fahrzeuges (FAR) mit einer fahrzeugseitigen Bemautungsvorrichtung (BE2), die eine Empfangseinheit (EM2) aufweist, die dazu eingerichtet ist, von dem Positionsermittlungssystem (PES) Positionsdaten zu empfangen und an eine Steuerung (ST2) der Bemautungsvorrichtung zu übertragen, die dazu eingerichtet ist, anhand der Positionsdaten aktuelle Ortskoordinaten (OKO) des Fahrzeuges (FAR) zu bestimmen, und die Bemautungsvorrichtung (BE2) eine Sendeeinheit (SEN) aufweist, die dazu eingerichtet ist, Daten an ein fahrzeugexternes Abrechnungszentrum (ABZ) zu übermitteln, welches eine Empfangseinheit (EM3) aufweist, die dazu eingerichtet ist, von der Bemautungsvorrichtung (BE2) Daten zu empfangen und an eine Steuerung (ST3) des Abrechnungszentrums (ABZ) weiterzuleiten, **dadurch gekennzeichnet, dass** die Steuerung (ST2) der Bemautungsvorrichtung (BE2) und/oder die Steuerung (ST3) des Abrechnungszentrums (ABZ), dazu eingerichtet ist, eine für eine befahrene Strecke charakteristische Signatur (SIG) als charakteristische Merkmale einer anhand der Ortskoordinaten ermittelten Trajektorie der gefahrenen Strecke zu berechnen, wobei die Steuerung des Abrechnungszentrums (ABZ) dazu eingerichtet ist, anhand der Signatur festzustellen, ob die Strecke (STR) mautpflichtig ist, wobei die Steuerung (ST3) weiters dazu eingerichtet ist, für den Fall, dass die befahrene Strecke (STR) mautpflichtig ist, anhand einer in einem Speicher (SPR) abgelegten Benutzerberechtigung (BER) zu überprüfen, ob das Fahrzeug (FAR) zur Benutzung dieser Strecke (STR) berechtigt ist.

2. Fahrzeugseitige Bemautungsvorrichtung (BE2) eines Mautsystems (SYS) die eine Empfangseinheit (EM2) aufweist, welche dazu eingerichtet ist, von einem Positionsermittlungssystem (PES) Positionsdaten zu empfangen und an eine Steuerung (ST2) zu übertragen, die dazu eingerichtet ist anhand der Positionsdaten aktuelle Ortskoordinaten (OKO) des Fahrzeuges (FAR) zu bestimmen, und die Bemautungsvorrichtung (BE2) eine Sendeeinheit (SEN) aufweist, die dazu eingerichtet ist, Daten an ein Abrechnungszentrum (ABZ) zu übermitteln **dadurch gekennzeichnet, dass** die Steuerung (ST2) der Bemautungsvorrichtung dazu eingerichtet ist, eine für eine befahrene Strecke charakteristische Signatur (SIG) als charakteristische Merkmale einer anhand der Orts-Koordinaten (OKO) ermittelten Trajektorie der gefahrenen Strecke zu berechnen und an die Sendeeinheit (SEN) zu übermitteln.

3. Bemautungsvorrichtung nach Anspruch 2, **dadurch gekennzeichnet, dass** die Steuerung (ST2) dazu eingerichtet ist die Signatur in vorgebbaren Zeitintervallen (INT) zu berechnen.

4. Bemautungsvorrichtung nach Anspruch 2 oder 3, **dadurch gekennzeichnet, dass** das Positionsermittlungssystem (PES) ein Satellitennavigationssystem ist.

5. Bemautungsvorrichtung nach einem der Ansprüche 2 bis 4, **dadurch gekennzeichnet, dass** sie dazu eingerichtet ist, die Signatur (SIG) an das Abrechnungszentrum (ABZ) über ein Funk-Netz (FUN) zu übertragen.

6. Bemautungsvorrichtung nach einem der Ansprüche 2 bis 5, **dadurch gekennzeichnet, dass** sie dazu eingerichtet ist, über das Funknetz (FUN) Positionskorrekturdaten (KOR) zur Ermittlung der Orts-Koordinaten (OKO) zu empfangen.

7. Fahrzeugexternes Abrechnungszentrum (ABZ) eines Mautsystems nach Anspruch 1, **dadurch gekennzeichnet, dass** die Empfangseinheit (EM3) des Abrechnungszentrums dazu eingerichtet ist, von der Bemautungsvorrichtung (BE2) Orts-Koordinaten des Fahrzeuges (FAR) zu empfangen und an die Steuerung (ST3) weiterzuleiten, die dazu eingerichtet ist, anhand der Orts-Koordinaten (OKO) die für die von dem Fahrzeug (FAR) befahrene Strecke (STR) charakteristische Signatur (SIG) zu berechnen.

8. Abrechnungszentrum nach Anspruch 7, **dadurch gekennzeichnet, dass** die Benutzungsberechtigung (BER) ein dem Fahrzeug (FAR) zugeordnetes Konto (KON) ist, und die Steuerung (ST3) dazu eingerichtet ist, eine anfallende Mautgebühr von dem Konto (KON) abzubuchen.

## Claims

1. Toll system (SYS) having a position determination system (PES) for determining the position of a vehicle (FAR) having an on-board toll payment device (BE2) which has a receiver unit (EM2) which is configured for receiving position data from the position determination system (PES) and transmitting said position data to a controller (ST2) of the toll payment device, said controller (ST2) being configured for determining current location coordinates (OKO) of the vehicle (FAR) on the basis of the position data, and the toll payment device (BE2) has a transmitter unit (SEN) which is configured for transmitting data to a vehicle-external billing centre (ABZ) which has a receiver unit (EM3) which is configured for receiving data from the toll payment device (BE2) and forwarding said data to a controller (ST3) of the billing centre (ABZ), **characterised in that** the controller (ST2) of the toll payment device (BE2) and/or the controller (ST3) of the billing centre (ABZ) are/is configured for calculating a signature (SIG) which is characteristic of a route travelled as characteristic features of a trajectory of the travelled route determined on the basis of the location coordinates, with the controller of the billing centre (ABZ) being configured for establishing, on the basis of the signature, whether the route (STR) is subject to a toll charge, with the controller (ST3) additionally being configured, in the event that the travelled route (STR) is subject to a toll charge, to check, on the basis of a user authorisation (BER) which is stored in a memory (SPR), whether the vehicle (FAR) is authorised to use said route (STR).

2. In-vehicle toll payment device (BE2) of a toll system (SYS), said toll payment device (BE2) having a receiver unit (EM2) which is configured for receiving position data from a position determination system (PES) and transmitting said position data to a controller (ST2) which is configured for determining current location coordinates (OKO) of the vehicle (FAR) on the basis of the position data, and the toll payment device (BE2) has a transmitter unit (SEN) which is configured for transmitting data to a billing centre (ABZ), **characterised in that** the controller (ST2) of the toll payment device is configured for calculating a signature (SIG) which is characteristic of a route travelled as characteristic features of a trajectory of the travelled route determined on the basis of the location coordinates (OKO) and for transmitting said signature (SIG) to the transmitter unit (SEN).

3. Toll payment device according to claim 2, **characterised in that** the controller (ST2) is configured for calculating the signature at predefinable time intervals (INT).

4. Toll payment device according to claim 2 or 3, **characterised in that** the position determination system (PES) is a satellite navigation system.

5. Toll payment device according to one of claims 2 to 4, **characterised in that** the toll payment device is configured for transmitting the signature (SIG) to the billing centre (ABZ) over a wireless network (FUN).

6. Toll payment device according to one of claims 2 to 5, **characterised in that** the toll payment device is configured for receiving position correction data (KOR) over the wireless network (FUN) for the purpose of determining the location coordinates (OKO).

7. Vehicle-external billing centre (ABZ) of a toll system according to claim 1, **characterised in that** the receiver unit (EM3) of the billing centre is configured for receiving location coordinates of the vehicle (FAR) from the toll payment device (BE2) and forwarding said coordinates to the controller (ST3) which is configured for calculating, on the basis of the location coordinates (OKO), the signature (SIG) which is characteristic of the route (STR) travelled by the vehicle (FAR).

8. Billing centre according to claim 7, **characterised in that** the usage authorisation (BER) is an account (KON) which is associated with the vehicle (FAR), and the controller (ST3) is configured for debiting from the account (KON) a toll charge that is incurred.

## Revendications

1. Système ( SYS ) de péage, comprenant un système ( PES ) de détermination de position pour la détermination de la position d'un véhicule ( FAR ), comprenant un dispositif ( BE2 ) de péage côté véhicule, qui a une unité ( EM2 ) de réception conçue pour recevoir des données de position du système ( PES ) de détermination de position et les transmettre à une commande ( ST2 ) du dispositif de péage, lequel est conçu pour, au moyen des données de position, déterminer des coordonnées ( OKO ) de localisation présentes du véhicule ( FAR ), et le dispositif ( BE2 ) de péage comporte une unité ( SEN ) d'émission conçue pour transmettre des données à un centre ( ABZ ) de calcul extérieur au véhicule et ayant une unité ( EM3 ) de réception, laquelle est conçue pour recevoir des données du dispositif ( BE2 ) de péage et les acheminer vers une commande ( ST3 ) du centre ( ABZ ) de calcul, **caractérisé en ce que** la commande ( ST2 ) du dispositif ( BE2 ) de péage et/ou la commande ( ST3 ) du centre ( AB2 ) de calcul est conçue pour calculer une signature ( SIG ) caractéristique de la section parcourue, la commande du centre ( ABZ ) de calcul étant conçue pour constater au moyen de la signature si le trajet (STR) est soumis à péage, la commande ( STS ) étant, en outre, conçue pour, dans le cas où la section ( STR ) parcourue est soumise à péage, contrôler, au moyen d'une justification ( BER ) d'utilisateur mémorisée dans une mémoire ( SPR ), si le véhicule ( FAR ) est autorisé à utiliser cette section ( STR ).

2. Dispositif ( BE2 ) de péage côté véhicule d'un système ( 6 ) de péage, qui a une unité ( EM2 ) de réception, conçue pour recevoir des données de position d'un système ( PES ) de détermination de position et les transmettre à une commande ( ST2 ), conçue pour déterminer, au moyen des données de position, des coordonnées ( OKO ) de localisation présentes du véhicule ( FAR ), et le dispositif ( BE2 ) de péage a une unité ( SEN ) d'émission conçue pour transmettre des données à un centre ( ABZ ) de calcul, **caractérisé en ce que** la commande ( ST2 ) du dispositif de péage est conçue pour calculer une signature ( SIG ) caractéristique d'une section parcourue comme disposition caractéristique d'un trajet, déterminé au moyen des coordonnées ( OKO ) de localisation, de la section parcourue et la transmettre à l'unité ( SEN ) d'émission.

3. Dispositif de péage suivant la revendication 2, **caractérisé en ce que** la commande ( ST2 ) est conçue pour calculer la signature à des intervalles ( INT ) de temps pouvant être prescrits.

4. Dispositif de péage suivant la revendication 2 ou 3, **caractérisé en ce que** le système ( PES ) de détermination de position est un système de navigation par satellite.

5. Dispositif de péage suivant l'une des revendications 2 à 4, **caractérisé en ce qu'**il est conçu pour transmettre la signature ( SIG ) au centre ( ABZ ) de calcul par un réseau radio ( FUN ).

6. Dispositif de péage suivant l'une des revendications 2 à 5, **caractérisé en ce qu'**il est conçu pour recevoir par le réseau radio ( FUN ) des données ( KOR ) de correction de position pour la détermination des coordonnées ( OKO ) de localisation.

7. Centre ( ABZ ) de calcul extérieur à un véhicule d'un système de péage suivant la revendication 1, **caractérisé en ce que** l'unité ( EM3 ) de réception du centre de calcul est conçue pour recevoir du dispositif ( BE2 ) de péage des coordonnées de localisation du véhicule ( FAR ) et pour les acheminer vers la commande ( ST3 ), qui est conçue pour calculer, au moyen des coordonnées ( OKO ) de localisation, la signature ( SIG ) caractéristique de la section ( STR ) parcourue par le véhicule ( FAR ).

8. Système de calcul suivant la revendication 7, **caractérisé en ce que** la justification ( BER ) d'utilisation est un compte ( KON ) associé au véhicule ( FAR ) et la commande ( ST3 ) est conçue pour débiter une taxe de péage échue du compte ( KON ).
